# EUROPÄISCHE PATENTANMELDUNG

(11) **EP 4 356 704 A2**
(43) Veröffentlichungstag der Anmeldung: **24.04.2024**
(21) Anmeldenummer: 24156509.2
(22) Anmeldetag: 07.08.2020
(51) Int. Cl.: A01B 69/00

(54) **HACKVORRICHTUNG**

(30) Priorität: 07.08.2019 DE 102019121322
(62) Teilanmeldung aus: 20190007.3
(71) Anmelder: Lemken GmbH & Co KG, 46519 Alpen (DE)
(72) Erfinder: Struik, Lauwrens, 3247CN Dirksland (NL); Geerse, Peter, 4373 RW Biggekerke (NL); Braber, Matthijs, 3244 AJ Nieuwe-Tonge (NL)

(57) **Zusammenfassung**

Die vorliegende Erfindung betrifft eine Hackvorrichtung (100) zur Kultivierung von in Reihen angebauten Nutzpflanzen oder Feldfrüchten, mit einem Rahmen (102) und einem Träger (1), an welchem zumindest zwei Hackwerkzeuge (2a, 2b, 2c) in Längsrichtung des Trägers (1) gesehen seitlich zueinander versetzt angeordnet sind, wobei der seitliche Abstand der Hackwerkzeuge (2a, 2b, 2c) zueinander einstellbar ist. Gemäß der Erfindung ist zumindest ein Hackwerkzeug (2a, 2c) mit einem an dem Träger (1) befestigten Verstellmittel (3) verbunden, wobei das Verstellmittel (3) werkzeuglos betätigbar ist, um zumindest den seitlichen Abstand des zumindest einen Hackwerkzeugs (2a, 2c) gegenüber dem Träger (1) oder dem anderen Hackwerkzeug (2a, 2b, 2c) einzustellen, wobei das Verstellmittel (3) einen, insbesondere selbsthemmenden, Antrieb (9) umfasst, und wobei zur, insbesondere automatischen, Ansteuerung des Verstellmittels (3) zumindest eine tastende oder berührungslos arbeitende Reihenerfassungsvorrichtung (27) an der Hackvorrichtung (100) angeordnet ist.

## Beschreibung

Die vorliegende Erfindung betrifft eine Hackvorrichtung zur Kultivierung von in Reihen angebauten Nutzpflanzen oder Feldfrüchten mit einem Rahmen und einem Träger, an welchem zumindest zwei Hackwerkzeuge in Längsrichtung des Trägers gesehen seitlich zueinander versetzt angeordnet sind, wobei der seitliche Abstand der Hackwerkzeuge zueinander einstellbar ist.

Aus der GB 633,740 A ist eine Hackvorrichtung der eingangs genannten Art bekannt. Die Hackvorrichtung umfasst einen Rahmen und einen Träger, an welchem zumindest zwei Hackwerkzeuge in Längsrichtung des Trägers gesehen seitlich zueinander versetzt angeordnet sind, wobei der seitliche Abstand der Hackwerkzeuge zueinander einstellbar ist. Hierzu ist das jeweilige Hackwerkzeuge an einem sich quer zum Träger erstreckenden Stützstange befestigt. Die jeweilige Stützstange ist mittels eines Klemmstücks an dem Träger durch Schraubverbindungen lösbar befestigt. Das Lösen der Schraubverbindungen erlaubt das seitliche Verschieben der einzelnen Stützstange und des daran angeordneten Hackwerkzeugs. Das Einstellen des seitlichen Abstands der Hackwerkzeuge der Hackvorrichtung gemäß der GB 633,740 A zur Anpassung an einen Reihenabstand ist mit einem großen manuellen Aufwand verbunden. Entsprechend wird eine einmal gewählte Einstellung des seitlichen Abstandes oftmals für die Dauer der Bearbeitung beibehalten. Zudem wird der seitliche Abstand der Hackwerkzeuge zueinander derart gewählt, dass ein Sicherheitsabstand zu den Nutzpflanzen oder Feldfrüchten gewährleistet ist, um etwaig auftretende Änderungen, insbesondere Reduzierungen, im Reihenabstand zur Vermeidung von Beschädigungen der Nutzpflanzen oder Feldfrüchte zu berücksichtigen.

Eine Hackvorrichtung mit seitlich im Abstand verstellbaren Hackwerkzeugen ist weiterhin aus der EP 0 426960 A2 bekannt. Auch hier erfordert die seitliche Verstellung der Hackwerkzeuge das Lösen von einer oder mehreren Schraubverbindungen, wie dies von der GB 633,740 A bekannt ist.

Die AT 520 294 B1 beschreibt eine Hackvorrichtung, mit einem Rahmen und einem Träger, an welchem zumindest zwei Hackwerkzeuge in Längsrichtung des Trägers gesehen seitlich zueinander versetzt angeordnet sind, wobei der seitliche Abstand der Hackwerkzeuge zueinander einstellbar ist. Hierzu sind auf dem Träger zwei Querstreben jeweils um eine vertikale Drehachse drehbar gelagert angeordnet. An den beiden Querstreben sind endseitig die Hackwerkzeuge mit einem definierten Abstand zu dem Träger befestigt. Durch das Verschwenken der Querstreben um die vertikale Drehachse wird der seitliche Abstand der an den Querstreben angeordneten Hackwerkzeuge zum Träger gleichförmig verändert. Das Verschwenken wird durch eine Stelleinrichtung erreicht.

Ausgehend von dem vorstehend beschriebenen Stand der Technik ist es nun die Aufgabe der vorliegenden Erfindung, eine Hackvorrichtung zur Kultivierung von in Reihen angebauten Nutzpflanzen oder Feldfrüchten bereitzustellen, welche sich durch eine vereinfachte und präzisere Anpassung der Hackwerkzeuge an Reihenabstände auszeichnet.

Diese Aufgabe wird ausgehend vom Oberbegriff des Anspruches 1 in Verbindung mit dessen kennzeichnenden Merkmalen gelöst.

Gemäß der Erfindung wird eine Hackvorrichtung zur Kultivierung von in Reihen angebauten Nutzpflanzen oder Feldfrüchten vorgeschlagen, mit einem Rahmen und einem Träger, an welchem zumindest zwei Hackwerkzeuge in Längsrichtung des Trägers gesehen seitlich zueinander versetzt angeordnet sind, wobei der seitliche Abstand der Hackwerkzeuge zueinander einstellbar ist. Um eine vereinfachte und präzisere Anpassung der Hackwerkzeuge an Reihenabstände zu ermöglichen, ist erfindungsgemäß vorgesehen, dass zumindest ein Hackwerkzeug mit einem, insbesondere quer zur Längsachse des Trägers verlaufenden, an dem Träger befestigten Verstellmittel verbunden ist, wobei das Verstellmittel werkzeuglos betätigbar ist, um zumindest den seitlichen Abstand des zumindest einen Hackwerkzeugs gegenüber dem Träger oder dem anderen Hackwerkzeug einzustellen, wobei das Verstellmittel einen, insbesondere selbsthemmenden, Antrieb umfasst, und wobei zur, insbesondere automatischen, Ansteuerung des Verstellmittels zumindest eine tastende oder berührungslos arbeitende Reihenerfassungsvorrichtung an der Hackvorrichtung angeordnet ist

Das werkzeuglos betätigbare Verstellmittel ermöglicht die individuelle Einstellung des Hackwerkzeugs unabhängig von einem weiteren Hackwerkzeug, das an dem Träger angeordnet ist. Die vereinfachte Einstellung des zumindest einen Hackwerkzeugs an der Hackvorrichtung erlaubt es, dieses einfach und schnell an die jeweiligen Boden- und Bestandsbedingungen ohne aufwendiges Schrauben anzupassen. Durch den Antrieb kann eine einfache und automatisierte Einstellung des zumindest einene Hackwerkzeuges ermöglicht werden. Durch einen selbsthemmenden Antrieb des Verstellmittel kann verhindert werden, dass die durch das Verstellmittel vorgenommene Einstellung des zumindest einen Hackwerkzeugs während des Betriebs der Hackvorrichtung erhalten bleibt. Einer ungewollten Verstellung aufgrund von Vibrationen, Erschütterungen oder sonstigen auf das Verstellmittel übertragenen Belastungen kann durch den selbsthemmenden Antrieb vermieden werden. Durch die einfache und schnelle Anpassung der Hackwerkzeuge kann der Abstand zur Kulturpflanze deutlich reduziert werden, wodurch die unbehandelte Fläche reduziert wird, und in der Kultur auch länger gehackt werden kann. Durch die geringe verbleibende nicht gehackte Restfläche neben der Kulturpflanze wird das Unkrautbekämpfungspotenzial deutlich erhöht. Weiterhin kann durch die Anpassung des zumindest einen Hackwerkzeugs die verbleibende nicht gehackte Restfläche für eventuelle Bandspritzungen zur Bekämpfung von Beiwuchs auf ein Minimum reduziert werden, wodurch auch der Mittelaufwand reduziert werden kann.

Mittels der zumindest einen Reihenerfassungsvorrichtung kann ein seitlicher Abstand des zumindest einen Hackwerkzeugs zu der Reihe mit Kulturpflanzen ermittelt werden. Der durch die Reihenerfassungsvorrichtung ermittelte seitliche Abstand wird als ein Parameter zur Ansteuerung des als Antriebsmotor ausgeführten Linearantriebs verwendet. Die Einhaltung und eine gegebenenfalls notwendige Anpassung des Abstands können dabei kontinuierlich vorgenommen werden. Die Auswertung der von der Reihenerfassungsvorrichtung bereitgestellten Signale kann beispielsweise durch das Steuergerät der Hackvorrichtung oder des Traktors erfolgen, mit dem die der Reihenerfassungsvorrichtung durch ein Bussystem, eine kabelgebundene Verbindung oder drahtlos, beispielsweise mittels Bluetooth oder einer sonstigen Funktechnik verbindbar ist. Denkbar ist aber auch, dass eine separate Recheneinheit an der Hackvorrichtung angeordnet ist, welche die Signale der Reihenerfassungsvorrichtung empfängt und auswertet.

Bevorzugt ist die Reihenerfassungsvorrichtung mit optischen, strahlungs- oder laufzeitbasierten Erfassungsmitteln ausgestattet. Vorzugsweise können die optischen Erfassungsmittel der berührungslos arbeitenden Reihenerfassungsvorrichtung als eine Kamera ausgeführt sein. Alternativ können die Erfassungsmittel als Lidar oder Laserscanner ausgeführt sein. Mittels der Reihenerfassungsvorrichtung können Faktoren wie die Anzahl und Größe des Beiwuchses, ein korrekter Reihenabstand, Pflanzengröße und Bodenzustand, welche maßgeblich den Arbeitserfolg beim Hacken beeinflussen, bestimmt werden. Je exakter die Einhaltung des Reihenabstands und die Pflanzgenauigkeit sind, desto näher kann an die Kulturpflanze heran gehackt werden, ohne dass die Gefahr einer Beschädigung der Kulturpflanzen besteht.

Gemäß einer bevorzugten Weiterbildung sind die Reihenerfassungsvorrichtung und/oder die Erfassungsmittel mit einer Recheneinheit verbunden, wobei die Reihenerfassungsvorrichtung und/oder die Erfassungsmittel charakteristische Eigenschaften der in Reihen angebauten Nutzpflanzen oder Feldfrüchte ermitteln, wobei die Recheneinheit dazu eingerichtet ist, die charakteristischen Eigenschaften mit in der Recheneinheit hinterlegten Vergleichswerten abzugleichen, und wobei die Recheneinheit dazu eingerichtet ist, den seitlichen Abstand anhand dieser Werte mittels des Antriebsmotors, insbesondere fortlaufend, einzustellen. Die Recheneinheit kann mit dem Steuergerät des Traktors in Kommunikationsverbindung stehen. Auf diese Weise stehen auch Betriebsparameter des Traktors, wie die aktuelle Fahrgeschwindigkeit und/oder Lenkbewegungen, zur Verfügung. Insbesondere der Betriebsparameter Fahrgeschwindigkeit und/oder Lenkbewegungen können bei der automatischen Ansteuerung des Verstellmittels Berücksichtigung finden.

Vorzugsweise ist zumindest eine zusätzliche Reihenerfassungsvorrichtung vorgesehen und derart bezüglich des Kulturpflanzenbestands ausgerichtet, dass diese einen Vorher-Nachher-Vergleich mit den Informationen ermöglicht, welche von der anderen Reihenerfassungsvorrichtung bereitgestellt werden. Dabei kann die zusätzliche Reihenerfassungsvorrichtung an dem Trägerbalken angeordnet sein. Die an dem Trägerbalken angeordnete zusätzliche Reihenerfassungsvorrichtung kann bevorzugt auf optischer Basis arbeiten. Die Recheneinheit kann dazu eingerichtet sein, die Signale der Reihenerfassungsvorrichtung an dem Trägerbalken und der Reihenerfassungsvorrichtung der zumindest einen Hackvorrichtung für einen Vorher-Nachher-Vergleich auszuwerten. Hierdurch kann die Ansteuerung des Antriebsmotors der zumindest einen Hackvorrichtung verbessert werden.

In einer bevorzugten Ausgestaltung umfasst das Steuergerät der Hackvorrichtung oder des Traktors eine Anzeigeeinheit, welche zumindest die aktuell eingestellte Position des zumindest einen seitlich verstellbaren Hackwerkzeugs anzeigt. Ebenso können eine Position der Nutzpflanzen, deren Reihenabstände, Bilddaten, und/oder andere Eigenschaften der Nutzpflanzen angezeigt werden

In einer besonders bevorzugten Ausgestaltung weist das Steuergerät ein Eingabemittel auf, welches die Eingabe eines einzustellenden seitlichen Abstands des zumindest einen seitlich verstellbaren Hackwerkzeugs durch eine Bedienperson ermöglicht. Anhand der Eingabe kann das Steuergerät Steuersignale generieren, die der Ansteuerung des Antriebsmotors dienen.

In einer besonders bevorzugten Ausgestaltung steht die Recheneinheit mit dem Steuergerät des Traktors in Kommunikationsverbindung. Auf diese Weise stehen auch Betriebsparameter des Traktors, wie die aktuelle Fahrgeschwindigkeit und/oder Lenkbewegungen, zur Verfügung. Insbesondere der Betriebsparameter Fahrgeschwindigkeit und/oder Lenkbewegungen können bei der automatischen Ansteuerung des Verstellmittels Berücksichtigung finden.

Vorzugsweise sind mittels der mindestens einen Reihenerfassungsvorrichtung und/oder der Erfassungsmittel charakteristische Eigenschaften der in Reihe angebauten Nutzpflanzen oder Feldfrüchte ermittelbar. Dabei können Faktoren wie die Anzahl und Größe des Beiwuchses, ein korrekter Reihenabstand, eine Pflanzengröße und/oder ein Bodenzustand bestimmt werden, welche maßgeblich den Arbeitserfolg beim Hacken beeinflussen.

In einer bevorzugten Ausgestaltungsform ist das Hackwerkzeug höhenverstellbar und/oder lösbar an dem Verstellmittel angeordnet.

In einer bevorzugten Ausgestaltung ist ein Hackwerkzeug individuell unabhängig von einem weiteren Hackwerkzeug einstellbar, wobei insbesondere die Einstellung des seitlichen Abstands des zumindest einen Hackwerkzeugs gegenüber dem Träger oder dem anderen Hackwerkzeug während des Einsatzes der Hackvorrichtung durchführbar ist. Hierdurch kann ein seitlicher Abstand zu einer Kulturpflanze verringert und damit die Hackleistung verbessert werden.

Gemäß einer bevorzugten Ausführungsform ist der Antrieb als Linearantrieb, insbesondere als eine Gewindespindel, ausgeführt, wobei insbesondere die Gewindespindel durch eine Handkurbel manuell betätigbar sein kann, und insbesondere die Handkurbel arretierbar ist. Der als Linearantrieb ausgeführte Antrieb des Verstellmittels ermöglicht eine gleichmäßige, stufenlose Verstellung des damit verbundenen Hackwerkzeugs. Das zumindest eine Hackwerkzeug kann somit stufenlos an die Kulturpflanzenreihe angepasst werden. Durch die Gewindespindel kann der seitliche Abstand des zumindest einen Hackwerkzeugs gegenüber dem Träger oder dem anderen Hackwerkzeug das Hackwerkzeug mit geringem Kraftaufwand stufenlos und werkzeuglos eingestellt werden. Durch eine Arretierung der Handkurbel kann die Funktion des selbsthemmenden Antriebes zusätzlich abgesichert bzw. unterstützt werden. Beispielsweise kann ein Griffelement der Handkurbel schwenkbar an dieser befestigt sein. Durch das Verschwenken des Griffelements kann dieses mit einer am Träger angeordneten Ausnehmung formschlüssig in Eingriff gebracht werden. Das formschlüssige in Eingriff bringen des Griffelements bewirkt eine Arretierung.

Gemäß einer bevorzugten Weiterbildung umfasst das Verstellmittel eine positionsveränderliche Linearführung, wobei insbesondere die Linearführung zumindest eine Führungsstange umfasst, deren Position relativ zum Träger sich durch den mit der zumindest einen Führungsstange verbundenen Linearantrieb verändern lässt, und insbesondere der Linearantrieb als ein Antriebsmotor ausgeführt ist. Die Linearführung dient dazu, ein Verdrehen des verstellbaren Hackwerkzeugs gegenüber dem Träger um die Längsachse des Antriebs zu verhindern. Die zumindest eine Führungsstange kann im Träger in einer hohlzylindrischen Buchse oder Ausnehmung geführt angeordnet sein. Die Führungsstange ist an den Linearantrieb gekoppelt, so dass diese eine Verschiebung in axialer Richtung erfährt, wenn der Linearantrieb betätigt wird. Bevorzugt können insbesondere zwei Führungsstangen achsparallel zu dem Linearantrieb angeordnet sein. Die zwei Führungsstangen sind dabei bevorzugt durch den Linearantrieb zueinander beabstandet angeordnet. Auf diese Weise kann ein von dem Linearantrieb aufgebrachtes Drehmoment drehrichtungsabhängig von der jeweiligen Führungsstange aufgenommen werden.

Die Ausführung des Linearantriebs als Antriebsmotor hat den Vorteil, dass die Einstellung des seitlichen Abstands des zumindest einen Hackwerkzeugs gegenüber dem Träger oder dem anderen Hackwerkzeug während des Einsatzes der Hackvorrichtung durchführbar ist. Insbesondere kann der Antriebsmotor entfernt ansteuerbar sein, beispielsweise aus der Kabine eines Traktors heraus, an welchem die Hackvorrichtung angebaut ist. Hierzu kann der Antriebsmotor durch ein Bussystem mit einem Steuergerät der Hackvorrichtung oder des Traktors in Verbindung stehen, um Steuersignale an den Antriebsmotor des zumindest einen Hackwerkzeugs zu übermitteln. Anstelle eines Bussystems kann eine kabelgebundene oder drahtlose Signalübertragung verwendet werden. Das Steuergerät der Hackvorrichtung oder des Traktors kann eine Anzeigeeinheit umfassen, welche die aktuell eingestellte Position des zumindest einen seitlich verstellbaren Hackwerkzeugs anzeigt. Ebenso können die Position der Nutzpflanzen, deren Reihenabstände oder Bilddaten oder andere Eigenschaften der Nutzpflanzen angezeigt werden. Weiterhin kann das Steuergerät ein Eingabemittel aufweisen, welches die Eingabe eines einzustellenden seitlichen Abstands des zumindest einen seitlich verstellbaren Hackwerkzeugs durch eine Bedienperson ermöglicht. Anhand der Eingabe kann das Steuergerät Steuersignale generieren, die der Ansteuerung des Antriebsmotors dienen. Bevorzugt kann der Antriebsmotor als Elektromotor ausgeführt sein. Alternativ kann der Linearantrieb auch hydraulisch oder pneumatisch arbeiten, beispielsweise bei einer Ausführung des Linearantriebs als ein Hubzylinder, der dem zumindest einen seitlich verstellbaren Hackwerkzeug zugeordnet ist.

Gemäß einer bevorzugten Weiterbildung ist der Linearführung eine Messeinrichtung zugeordnet, die zur Erfassung der eingestellten Position des Hackwerkzeugs eingerichtet ist. Die Messeinrichtung kann als eine Skale ausgeführt sein, welche bei einer manuellen Einstellung zur Anwendung kommen kann. Mit der Skale kann der für das zumindest eine Hackwerkzeug eingestellte Abstandswert gegenüber dem Träger erfasst bzw. abgelesen werden. Der von der Skale abgelesene Abstandswert kann von einer Bedienperson entsprechend auf weitere seitlich verstellbare Hackwerkzeuge der Hackvorrichtung übertragen werden. Hierdurch wird der zeitliche Aufwand bei der Einstellung des seitlichen Abstands zur Anpassung eine Reihenbreite von Kulturpflanzen deutlich verringert. Insbesondere sind die vorgenommenen Einstellungen in einfacher Weise durch die Bedienperson reproduzierbar. Alternativ kann die Messeinrichtung beispielsweise als ein Zählwerk ausgeführt sein, welches die Anzahl von Spindelumdrehungen der Gewindespindel bei manueller Betätigung des Linearantriebes erfasst.

Weiterhin ist denkbar, dass die Messeinrichtung als ein Positionssensor oder ein Zählwerk ausgeführt sein kann. Durch die als Positionssensor oder Zählwerk ausgeführte Messeinrichtung kann die durch den als Antriebsmotor ausgeführten Linearantrieb eingestellte Abstandsveränderung erfasst werden. Hierbei kann der Antriebsmotor auch als ein Schrittmotor ausgebildet sein, wodurch die Erfassung der eingestellten Position des Hackwerkzeugs ermöglicht wird.

Insbesondere bei einer als Schrittmotor ausgeführten Messeinrichtung, welcher zugleich als Antriebsmotor dient, kann durch eine Rückkopplung zwischen dem Schrittmotor und der Recheneinheit auf einer Anzeigeeinheit der jeweils eingestellte Abstand visualisiert werden. Des Weiteren kann die Recheneinheit die von den Erfassungsmitteln der Reihenerfassungsvorrichtung empfangenen und ausgewerteten Signale zur Ansteuerung des Antriebsmotors für eine synchrone oder individuelle Einstellung des seitlichen Abstands des zumindest einen Hackwerkzeugs gegenüber dem Träger oder dem anderen Hackwerkzeug verwenden.

Weiterhin kann ein Anbaurahmen zur Verbindung mit einer landwirtschaftlichen Arbeitsmaschine vorgesehen sein, an dem ein Trägerbalken achsparallel angeordnet ist, wobei an dem Trägerbalken zumindest eine erfindungsgemäße Hackvorrichtung angeordnet ist. Dabei können der Anbaurahmen und der Trägerbalken durch zumindest zwei Hebelarme gelenkig oder durch eine Schiebevorrichtung beweglich miteinander verbunden sein. Zumindest ein wenigstens einen der zumindest zwei Hebelarme oder die Schiebevorrichtung betätigender Aktuator kann zur parallelogrammförmigen oder achsparallelen Verstellung des Trägerbalkens relativ zu dem Anbaurahmen vorgesehen sein. Mittels des Anbaurahmens ist der Trägerbalken frontseitig oder heckseitig an der Arbeitsmaschine anbringbar. Dabei ist der Anbaurahmen bei frontseitiger Anbringung hinter dem Trägerbalken und bei heckseitiger Anbringung vor dem Trägerbalken positioniert. Bevorzugt kann der zumindest eine Aktuator als ein Gleichlaufzylinder ausgeführt sein. Durch eine Ansteuerung des zumindest einen Aktuators lässt sich eine Anpassung von an dem Trägerbalken angeordneten Hackvorrichtungen an den Reihenabstand erreichen, um Abweichungen von der optimalen Fahrgasse durch die Arbeitsmaschine auszugleichen.

Insbesondere kann die Recheneinheit zur Ansteuerung des Antriebsmotors der zumindest einen Hackvorrichtung in Abhängigkeit von durch zumindest eine zuvor erwähnte und/oder einer zusätzlichen Reihenerfassungsvorrichtung detektierten Reihenpositionen eingerichtet sein. Die zumindest eine zusätzliche Reihenerfassungsvorrichtung ist derart bezüglich des Kulturpflanzenbestands ausgerichtet, dass diese einen Vorher-Nachher-Vergleich mit den Informationen ermöglicht, die von der an der zumindest einen Hackvorrichtung angeordneten Reihenerfassungsvorrichtung bereitgestellt werden. Dabei kann die zusätzliche Reihenerfassungsvorrichtung an dem Trägerbalken angeordnet sein. Die an dem Trägerbalken angeordnete zusätzliche Reihenerfassungsvorrichtung kann bevorzugt auf optischer Basis arbeiten. Die Recheneinheit kann dazu eingerichtet sein, die Signale der Reihenerfassungsvorrichtung an dem Trägerbalken und der Reihenerfassungsvorrichtung der zumindest einen Hackvorrichtung für einen Vorher-Nachher-Vergleich auszuwerten. Hierdurch kann die Ansteuerung des Antriebsmotors der zumindest einen Hackvorrichtung verbessert werden. Weiterhin kann die Recheneinheit dazu eingerichtet sein, die Signale der an dem Trägerbalken angeordneten zusätzlichen Reihenerfassungsvorrichtung zusätzlich zur Ansteuerung des zumindest einen Aktuators an dem Anbaurahmen in Abhängigkeit von durch die zusätzliche Reihenerfassungsvorrichtung detektierten Reihenpositionen zu verwenden.

Die vorliegende Erfindung wird nachstehend anhand von in den Zeichnungen dargestellten Ausführungsbeispielen näher erläutert:
Es zeigen:
- Fig. 1: schematisch eine Ansicht mehrerer an einem Trägerbalken angeordneter Hackvorrichtungen;
- Fig. 2: schematisch eine perspektivische Ansicht eines Verstellmittels zur Einstellung eines seitlichen Abstands eines Hackwerkzeugs der Hackvorrichtung;
- Fig. 3: schematisch eine perspektivische Teilansicht des Hackwerkzeugs gemäß Fig. 2;
- Fig. 4: schematisch eine perspektivische Ansicht eines Verstellmittels zur Einstellung eines seitlichen Abstands eines Hackwerkzeugs der Hackvorrichtung gemäß einer weiteren Ausführungsform; und
- Fig. 5: schematisch eine perspektivische Teilansicht des Hackwerkzeugs gemäß Fig. 4;

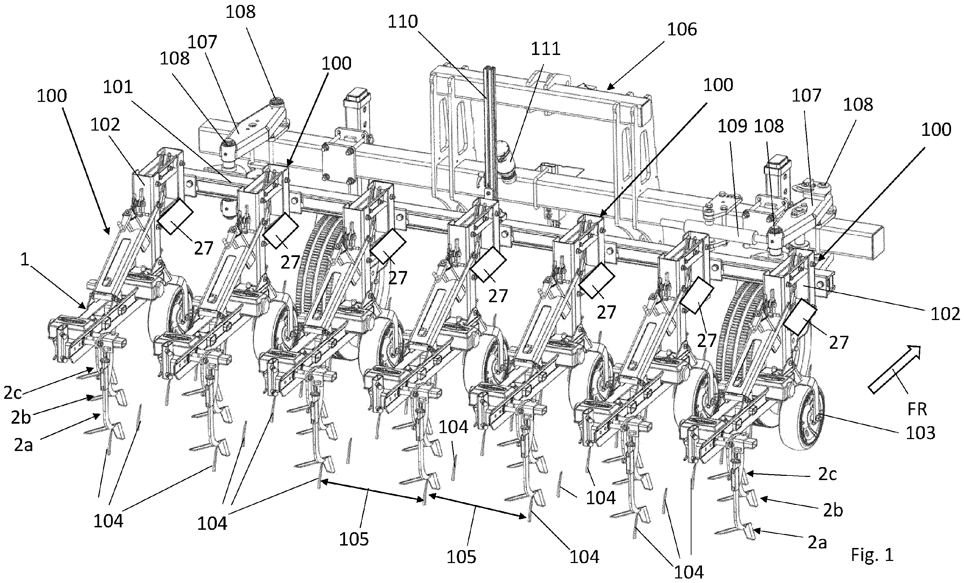

In Fig. 1 ist schematisch eine Ansicht mehrerer erfindungsgemäß ausgebildeter Hackvorrichtungen 100 dargestellt. Die Hackvorrichtungen 100 sind an einem quer zur Fahrtrichtung FR orientierten, insbesondere profilierten, Trägerbalken 101 nebeneinander angeordnet und lösbar an diesem befestigt. Der Trägerbalken 101 kann beispielsweise an einer landwirtschaftlichen Arbeitsmaschine, beispielsweise einem Dreipunktanbau eines Traktors, angeordnet werden, welche die Hackvorrichtung 100 in Fahrtrichtung FR hinter sich herzieht oder in Fahrtrichtung FR schiebt. Die jeweilige Hackvorrichtung 100 weist einen Rahmen 102 zur Anbringung an dem Trägerbalken 101 und einen Träger 1 auf. An dem Träger 1 sind Hackwerkzeuge 2a, 2b, 2c in Längsrichtung des Trägers 1 gesehen seitlich zueinander versetzt angeordnet. In Fahrtrichtung FR gesehen ist an dem jeweiligen Rahmen 102 ein Stützrad 103 angeordnet. Das Stützrad 103 dient in Verbindung mit der dargestellten Parallelogrammaufhängung, welche zwischen Trägerbalken 101 und den jeweiligen Rahmen 102 angeordnet sind, zur Tiefenführung des Rahmens 102 bzw. seiner Werkzeuge 2a, 2b, 2c relativ zur Bodenoberfläche.

In mehreren Reihen mit einem Reihenabstand 105 angeordnete Kulturpflanzen 104, d.h. Nutzpflanzen oder Feldfrüchte, geben den einstellbaren Abstand der an dem Grundrahmen 101 angeordneten Hackvorrichtungen 100 zueinander vor. Die außenseitig an dem Träger 1 angeordneten Hackwerkzeuge 2a und 2c sind im seitlichen Abstand zueinander werkzeuglos einstellbar, was nachstehend beispielhaft anhand des Hackwerkzeugs 2a beschrieben wird. Das Hackwerkzeug 2b, welches im Wesentlichen mittig an der Unterseite des Trägers 1 angeordnet ist, ist gegenüber den äußeren Hackwerkzeugen 2a und 2c ortsfest.

An der Hackvorrichtung 100, insbesondere an dem Rahmen 101, kann zumindest eine tastende oder berührungslos arbeitende Reihenerfassungsvorrichtung 27 angeordnet sein. Im Falle einer tastenden Reihenerfassungsvorrichtung sind bewegliche, die Position der Kulturpflanzen 104 erfassende Taster vorgesehen, welche mit einem Positionssensor die Position der Kulturpflanzen 104 relativ zur Hackvorrichtung 100 bzw. seiner Werkzeuge 2a, 2b, 2c als vorzugsweise elektrisches Signal erfassen. Im dargestellten Ausführungsbeispiel arbeitet die Reihenerfassungsvorrichtung 27 berührungslos. Hierzu ist die berührungslos arbeitende Reihenerfassungsvorrichtung 27 mit optischen, strahlungs- oder laufzeitbasierten Erfassungsmitteln 28 ausgestattet, beispielsweise mit einer Kamera. Das Erfassungsmittel 28 kann auch als Lidar oder Radar oder Laserscanner oder als Ultraschallsensor ausgeführt sein.

Des Weiteren zeigt die Abbildung gemäß Fig. 1 einen optionalen Anbaurahmen 106 zur Verbindung des Trägerbalkens 101 mit einer landwirtschaftlichen Arbeitsmaschine, insbesondere zum front- oder heckseitigen Anbau an einem Traktor. An dem Anbaurahmen 106 ist der Trägerbalken 101 im Wesentlichen achsparallel angeordnet. Der Anbaurahmen 106 und der Trägerbalken 101 sind durch zumindest zwei Hebelarme 107 gelenkig und lösbar miteinander verbunden. Die Hebelarme 107 sind um vertikale Drehachsen 108 an dem Anbaurahmen 106 und dem Trägerbalken 101 schwenkbar. Für eine automatische parallelogrammförmige Verstellung des Trägerbalken 101 relativ zu dem Anbaurahmen 106 ist zumindest ein Aktuator 109 vorgesehen, welcher wenigstens einen der zumindest zwei Hebelarme 107 betätigt. Der zumindest eine Aktuator 109 ist bevorzugt als ein Gleichlaufzylinder ausgeführt.

An dem Trägerbalken 101 ist, vorzugsweise mittig, eine vertikal verlaufende Schiene 110 angeordnet. An der Schiene 110 ist eine Reihenerfassungsvorrichtung 111 angeordnet, welche in Fahrtrichtung FR gesehen, der vorausschauenden Erfassung des Reihenabstands 105 bzw. der Position einer einzelnen Reihe der angeordneten Kulturpflanzen 104 dient. Die Reihenerfassungsvorrichtung 111 ist vorzugsweise als Kamera, Lidar- oder Radareinrichtung ausgeführt. Das Signal der Reihenerfassungsvorrichtung 111 kann ausgewertet und zur Ansteuerung des zumindest einen Aktuators 109 herangezogen werden, um den Trägerbalken 101 relativ zu dem Anbaurahmen 106 zu verschieben. Hierdurch lässt sich eine Anpassung der an dem Trägerbalken 101 angeordneten Hackvorrichtung 100 an den Reihenabstand 105 erreichen, um Abweichungen von der optimalen Fahrgasse durch die Arbeitsmaschine auszugleichen.

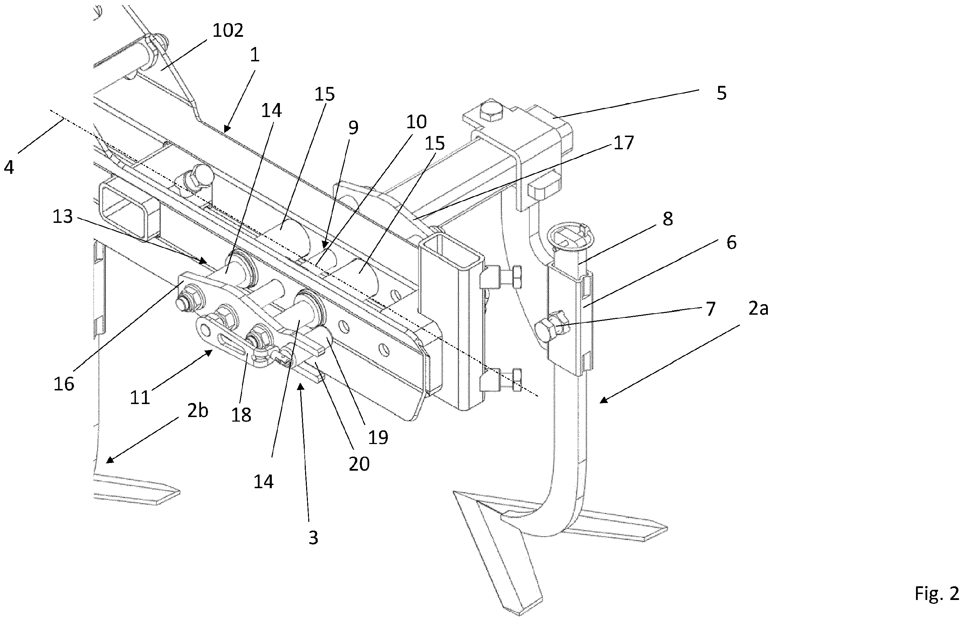

Die Darstellung in Fig. 2 zeigt schematisch eine perspektivische Ansicht eines Verstellmittels 3 zur Einstellung des seitlichen Abstands zumindest eines Hackwerkzeugs 2a der Hackvorrichtung 100 gegenüber dem Hackwerkzeug 2b bzw. dem Träger 1. Das zumindest eine Hackwerkzeug 2a ist mit dem quer zur Längsachse 4 des Trägers 1 orientierten und an dem Träger 1 befestigten Verstellmittel 3 verbunden. Dabei ist das Verstellmittel 3 werkzeuglos betätigbar, um den seitlichen Abstand des zumindest einen Hackwerkzeugs 2a gegenüber dem Träger 1 und/oder dem anderen Hackwerkzeug 2b, 2c einzustellen.

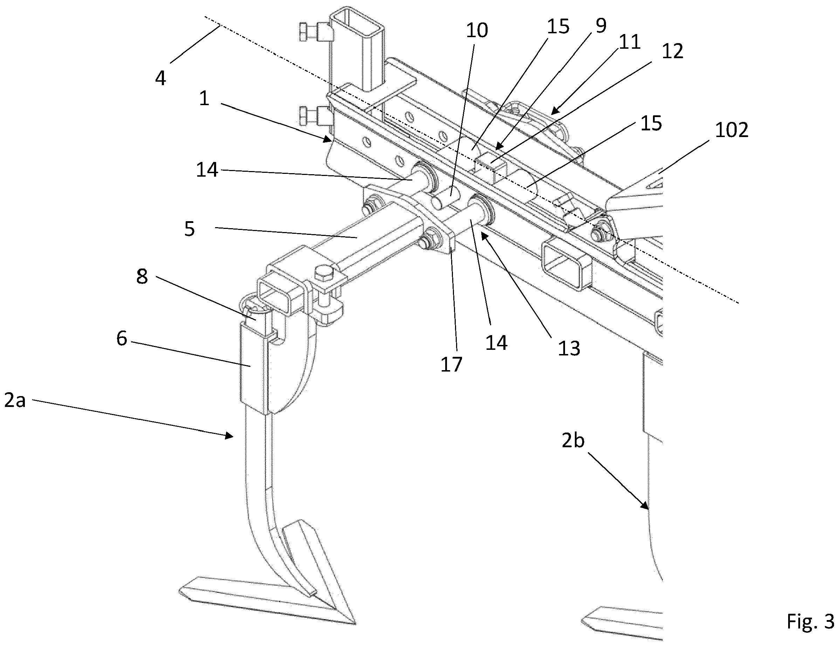

Das Hackwerkzeug 2a ist an einem Tragarm 5 lösbar angeordnet, der seitlich über den Träger 1 hinausragt. Der Tragarm 5 und das daran angeordnete Hackwerkzeug 2a sind durch das Verstellmittel 3 mit dem Träger 1 seitlich verstellbar verbunden. An dem Tragarm 5 ist das Hackwerkzeug 2a in einer Vertikalführung 6 mittels einer Schraubverbindung 7 lösbar befestigt. Innerhalb der Vertikalführung 6 ist ein Schaftabschnitt 8 des Hackwerkzeugs 2a relativ beweglich geführt. Die Hackwerkzeuge 2a, 2b, 2c sind im dargestellten Ausführungsbeispiel als Hackschare ausgeführt. Die Hackwerkzeuge 2a, 2b, 2b können auch als Messer ausgeführt sein. Das Verstellmittel 3 umfasst einen selbsthemmenden Antrieb 9, welcher im dargestellten Ausführungsbeispiel als Linearantrieb, insbesondere als Gewindespindel 10 ausgeführt ist. Die mit einem Außengewinde ausgeführte Gewindespindel 10 weist an ihrem einen Ende eine Handkurbel 11 auf, mit der die Gewindespindel 10 im und gegen den Uhrzeigersinn drehbar ist. Die Gewindespindel 10 erstreckt sich durch ein einen Innengewindeabschnitt aufweisendes Bauteil 12, welches an dem Träger 1 angeordnet ist, wie aus Fig. 3 ersichtlich ist.

Das Verstellmittel 3 umfasst weiterhin eine positionsveränderliche Linearführung 13. Die Linearführung 13 weist zumindest eine zylindrische Führungsstange 14 auf, deren Position relativ zu dem Träger 1 sich durch den mit der zumindest einen Führungsstange 14 verbundenen Antrieb 9 verändern lässt. Im dargestellten Ausführungsbeispiel sind zwei Führungsstangen 14 vorgesehen, welche achsparallel zu der Gewindespindel 10 angeordnet sind. Die Führungsstangen 14 weisen eine über die Breite des Trägers 1 hinausgehende Länge auf. Die Enden der Führungsstangen 14 ragen abschnittsweise an beiden Seiten des Trägers 1 über diesen 1 hinaus. Die Führungsstangen 14 sind jeweils in einer Buchse 15 axial verschieblich gelagert. Die Buchsen 15 sind an dem Träger 1 befestigt. Die Linearführung 13 dient neben der Führung des Hackwerkzeugs 2a bei einer seitlichen Verstellung auch dazu, ein Verdrehen um die Längsachse der Gewindespindel 10 zu vermeiden.

An den freien Enden der Führungsstangen 14 sind plattenförmige Anschlusselemente 16, 17 lösbar angeordnet. In dem Anschlusselement 16 ist ein Ende der Gewindespindel 10 drehbar gelagert. An dem gelagerten Ende der Gewindespindel 10 ist die Handkurbel 11 befestigt. Die Handkurbel 11 weist einen Kurbelkörper 18 und einen schwenkbar an dem Kurbelkörper 18 angelenkten Handgriff 19 auf. Fig. 2 zeigt die Handkurbel 11 in einer arretierten Position. Hierzu ist der Handgriff 19 in eine zur Gewindespindel 10 achsparallele Stellung überführt, in welcher der Handgriff 19 mit einer Ausnehmung 20 an dem Anschlusselement 16 formschlüssig in Eingriff steht.

Der Linearführung 13 ist zumindest eine - nicht dargestellte - Skale zugeordnet, die der Visualisierung der eingestellten Position dient. Dabei ist die Skale auf einer der Führungsstangen 14 angeordnet, wodurch sich der eingestellte seitliche Abstand des Hackwerkzeugs 2a ablesen lässt.

Die Darstellung in Fig. 3 zeigt schematisch eine perspektivische Teilansicht der Hackvorrichtung 100 gemäß Fig. 2 in einer um 180° um eine vertikale Achse gedrehten Ansicht. Das Anschlusselement 17 ist mit den Enden der Führungsstangen 14 verbunden. An der dem Träger 1 abgewandten Seite des Anschlusselementes 17 ist der Tragarm 5 mit dem daran angeordneten Hackwerkzeug 2a angeordnet. Durch eine Betätigung der Handkurbel 11 lässt sich der seitliche Abstand zwischen dem Anschlusselement 17 und dem Träger 1 werkzeuglos verändern, wodurch sich entsprechend der seitliche Abstand des Hackwerkzeugs 2a gegenüber dem Träger 1 und/oder dem Hackwerkzeug 2b verändern lässt.

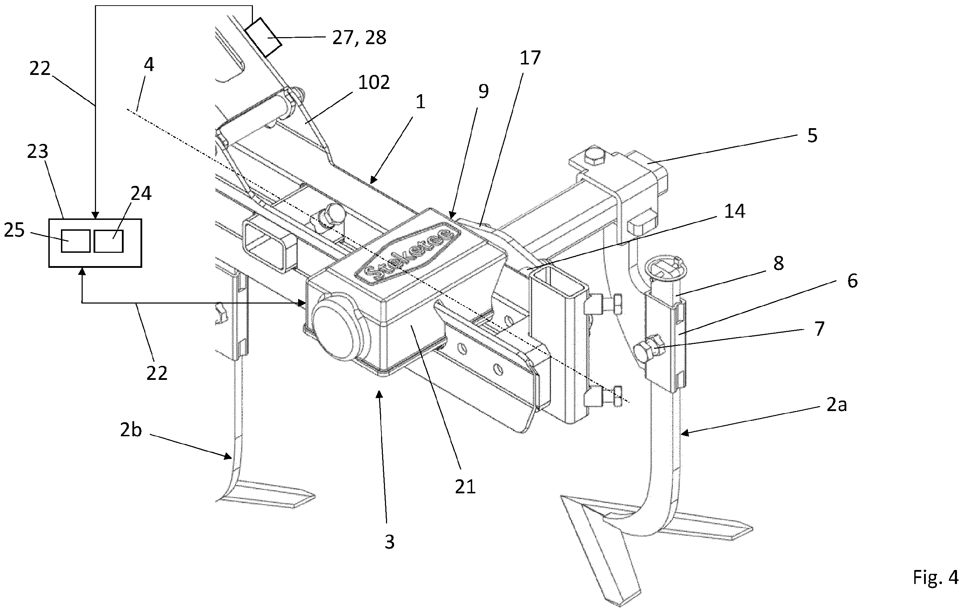

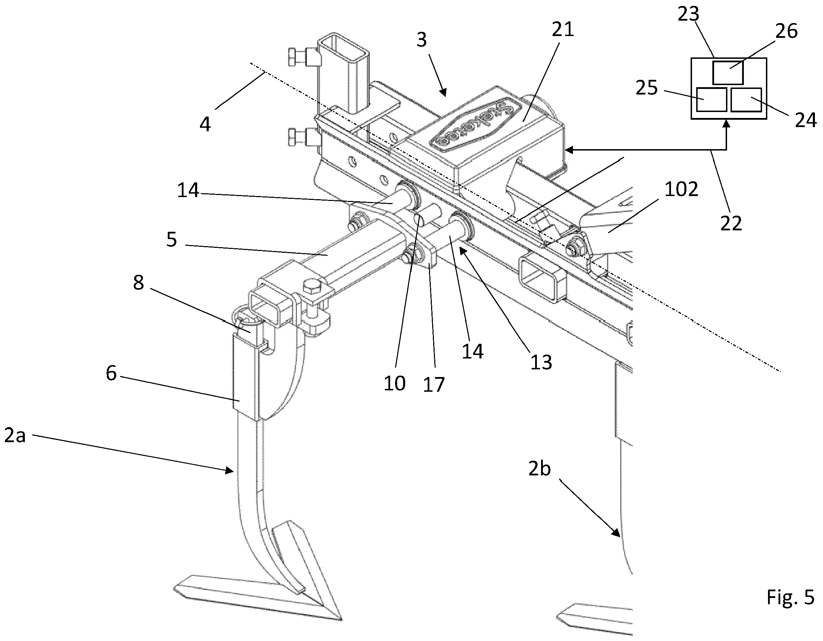

In Fig. 4 ist schematisch eine perspektivische Ansicht eines Verstellmittels 3 zur Einstellung eines seitlichen Abstands des Hackwerkzeugs 2a der Hackvorrichtung 100 gemäß einer weiteren Ausführungsform dargestellt. Die Darstellung in Fig. 5 zeigt schematisch eine perspektivische Teilansicht der Hackvorrichtung 100 gemäß Fig. 4 in einer um 180° um eine vertikale Achse gedrehten Ansicht. Für funktionsgleiche Bauteile dieser weiteren Ausführungsform wurden die bereits zuvor verwendeten Bezugszeichen beibehalten.

Die Ausführungsform gemäß den Fig. 4 und 5 unterscheidet sich von der vorangehend anhand der Fig. 2 und 3 beschriebenen Ausführungsform durch das zum Einsatz kommende Verstellmittel 3. Das Verstellmittel 3 umfasst als Linearantrieb einen Antriebsmotor 21, der die Gewindespindel 10 antreibt. Der Antriebsmotor 21 selbst kann auch mit einer Gewindespindel versehen sein. Durch eine entsprechende Ansteuerung des Antriebsmotors 21 wird die Gewindespindel 10 im oder gegen den Uhrzeigersinn gedreht und die rotatorische Bewegung der Gewindespindel 10 auf die Linearführung 13 übertragen, um die werkzeuglose seitliche Verstellbarkeit des Hackwerkzeugs 2a gegenüber dem Träger 1 und/oder dem Hackwerkzeug 2b zu bewirken.

Zur Ansteuerung des Antriebsmotors 21 ist dieser beispielsweise durch ein Bussystem 22 oder eine Kabelverbindung mit einem der Hackvorrichtung 100 zugeordneten Steuergerät 23 mit einer Recheneinheit 24 verbunden. Das Steuergerät 23 kann auf einem - nicht dargestellten - Traktor angeordnet sein, an welchem die Hackvorrichtung 100 angeordnet ist. Das Steuergerät 23 kann neben der Recheneinheit 24 eine Anzeigeeinheit 25 umfassen, welche die aktuell eingestellte Position des zumindest einen seitlich verstellbaren Hackwerkzeugs 2a anzeigt. Weiterhin kann das Steuergerät 23 ein Eingabemittel 26 aufweisen, welches die Eingabe eines einzustellenden seitlichen Abstands des zumindest einen seitlich verstellbaren Hackwerkzeugs 2a durch eine Bedienperson ermöglicht. Anhand der Eingabe kann das Steuergerät 23 entsprechende Steuersignale generieren und über das Bussystem 22 oder eine Kabelverbindung übertragen, die der Ansteuerung des Antriebsmotors 21 dienen. Denkbar ist auch eine drahtlose Kommunikation zur Übertragung von Steuersignalen an den jeweiligen Antriebsmotor 21. Die elektrische Einstellung des seitlichen Abstands des zumindest einen seitlich verstellbaren Hackwerkzeugs 2a aus einer Traktorkabine heraus erlaubt eine einfache Justierung auch während der Fahrt.

Die an dem Rahmen 101 angeordnete berührungslos arbeitende Reihenerfassungsvorrichtung 27 steht durch das Bussystem 22, eine Kabelverbindung oder drahtlos mit dem Steuergerät 23 in Verbindung. In dem dargestellten Ausführungsbeispiel ist die Reihenerfassungsvorrichtung 27 als Kamera ausgeführt. Mittels der Reihenerfassungsvorrichtung 27 lässt sich der Reihenabstand 105 zwischen zwei Reihen mit Kulturpflanzen 104 bzw. die seitlich zur Fahrrichtung FR gesehene Position der Kulturzpflanzen 104 fortlaufend bestimmen, um gegebenenfalls den seitlichen Abstand eines oder beider Hackwerkzeuge 2a, 2c zueinander oder zum Träger 1 anzupassen. Der seitliche Abstand der Hackwerkzeuge 2a, 2c ist dabei vorzugsweise unabhängig voneinander einstellbar. Die Einstellung des seitlichen Abstands des oder der Hackwerkzeuge 2a, 2c kann in Abhängigkeit von der Kulturpflanze 104 in der Reihe und der Fahrgeschwindigkeit der Arbeitsmaschine optimiert werden. Die Reihenerfassungsvorrichtung 27 und/oder die Erfassungsmittel 28 können auch mit einer separaten Recheneinheit verbunden sein. Mittels der Reihenerfassungsvorrichtung 27 und/oder des Erfassungsmittels 28 können charakteristische Eigenschaften der in Reihen angebauten Kulturpflanzen 104 ermitteln, wobei die Recheneinheit 24 dazu eingerichtet ist, die charakteristischen Eigenschaften mit in der Recheneinheit 24 hinterlegten Vergleichswerten abzugleichen, und wobei die Recheneinheit 24 dazu eingerichtet ist, den seitlichen Abstand des oder der Hackwerkzeuge 2a, 2c anhand dieser Werte mittels des Antriebsmotors 21, insbesondere fortlaufend, einzustellen.

Die Reihenerfassungsvorrichtung 27 an der jeweiligen Hackvorrichtung 100 und die Reihenerfassungsvorrichtung 111 an dem Trägerbalken 101 ermöglichen darüber hinaus eine Überprüfung des Arbeitsergebnisses durch einen Vorher-Nachher-Vergleich. In Abhängigkeit von einem geschobenen oder gezogenen Betrieb der Hackvorrichtungen 100 fungiert wahlweise die Reihenerfassungsvorrichtung 111 an dem Trägerbalken 101 oder die Reihenerfassungsvorrichtung 27 an der jeweiligen Hackvorrichtung 100 als vorausschauende Reihenerfassungsvorrichtung für einen Vorher-Nachher-Vergleich. Zur Ansteuerung des Antriebsmotors 21 an der Hackvorrichtung 100 können die Signale der Reihenerfassungsvorrichtung 27 und/oder der Reihenerfassungsvorrichtung 111 herangezogen werden. Hierfür steht das Steuergerät 23 auch mit der Reihenerfassungsvorrichtung 111 durch das Bussystem 22 in Verbindung, um Signale von der Reihenerfassungsvorrichtung 111 zu empfangen und auszuwerten. Zudem ist die Recheneinheit 24 des Steuergeräts 23 zur Durchführung des Vorher-Nachher-Vergleichs eingerichtet. Insbesondere kann durch einen Datenabgleich festgestellt werden, ob die durch die Reihenerfassungsvorrichtung 111 detektierten Nutzpflanzen nach dem Arbeitsvorgang durch Reihenerfassungsvorrichtung 27 ebenfalls detektiert werden. Falls dies nicht der Fall ist, können die Hackwerkzeuge 2a, 2c entsprechend korrigiert werden. Weiterhin bietet sich an, die Bilddaten der durch die Reihenerfassungsvorrichtungen 111 und/oder 27 ebenfalls auf der Anzeigeeinheit 25 zu visualisieren, vorzugsweise zusammen mit den dargestellten Abständen der Hackwerkzeuge 2a, 2c, beispielsweise in einer "Augmentet reality Darstellung".

Weiterhin kann das Hackergebnis zwischen den Nutzpflanzenreihen durch den Vorher-Nachher-Vergleich dargestellt, be- oder ausgewertet werden.

### Bezugszeichenliste

| | | | |
|---|---|---|---|
| 1 | Träger | 100 | Hackvorrichtung |
| 2a, 2b, 2c | Hackwerkzeug | 101 | Trägerbalken |
| 3 | Verstellmittel | 102 | Rahmen |
| 4 | Längsachse von 1 | 103 | Stützrad |
| 5 | Tragarm | 104 | Kulturpflanze |
| 6 | Vertikalführung | 105 | Reihenabstand |
| 7 | Schraubverbindung | 106 | Anbaurahmen |
| 8 | Schaftabschnitt | 107 | Hebelarm |
| 9 | Antrieb | 108 | Drehachse |
| 10 | Gewindestange | 109 | Aktuator |
| 11 | Handkurbel | 110 | Schiene |
| 12 | Bauteil | 111 | Reihenerfassungsvorrichtung |
| 13 | Linearführung | | |
| 14 | Führungsstange | | |
| 15 | Buchse | | |
| 16 | Anschlusselement | | |
| 17 | Anschlusselement | | |
| 18 | Kurbelkörper | | |
| 19 | Handgriff | | |
| 20 | Ausnehmung | | |
| 21 | Antriebsmotor | | |
| 22 | Bussystem | | |
| 23 | Steuergerät | | |
| 24 | Recheneinheit | | |
| 25 | Anzeigeeinheit | | |
| 26 | Eingabemittel | | |
| 27 | Reihenerfassungsvorrichtung | | |
| 28 | Erfassungsmittel | | |

## Patentansprüche

1. Hackvorrichtung (100) zur Kultivierung von in Reihen angebauten Nutzpflanzen oder Feldfrüchten, mit einem Rahmen (102) und einem Träger (1), an welchem zumindest zwei Hackwerkzeuge (2a, 2b, 2c) in Längsrichtung des Trägers (1) gesehen seitlich zueinander versetzt angeordnet sind, wobei der seitliche Abstand der Hackwerkzeuge (2a, 2b, 2c) zueinander einstellbar ist, **dadurch gekennzeichnet, dass** zumindest ein Hackwerkzeug (2a, 2c) mit einem an dem Träger (1) befestigten Verstellmittel (3) verbunden ist, wobei das Verstellmittel (3) werkzeuglos betätigbar ist, um zumindest den seitlichen Abstand des zumindest einen Hackwerkzeugs (2a, 2c) gegenüber dem Träger (1) oder dem anderen Hackwerkzeug (2a, 2b, 2c) einzustellen, wobei das Verstellmittel (3) einen, insbesondere selbsthemmenden, Antrieb (9) umfasst, und wobei zur, insbesondere automatischen, Ansteuerung des Verstellmittels (3) zumindest eine tastende oder berührungslos arbeitende Reihenerfassungsvorrichtung (27) an der Hackvorrichtung (100) angeordnet ist.

2. Hackvorrichtung (100) nach Anspruch 1, **dadurch gekennzeichnet, dass** die Reihenerfassungsvorrichtung (27) mit optischen, strahlungs- oder laufzeitbasierten Erfassungsmitteln (28) ausgestattet ist.

3. Hackvorrichtung (100) nach Anspruch 1 oder 2, **dadurch gekennzeichnet, dass** die Reihenerfassungsvorrichtung (27) und/oder die Erfassungsmittel (28) mit einer Recheneinheit (24) verbunden sind, wobei die Reihenerfassungsvorrichtung (27) und/oder die Erfassungsmittel (28) charakteristische Eigenschaften der in Reihen angebauten Nutzpflanzen oder Feldfrüchte ermitteln, wobei die Recheneinheit (24) dazu eingerichtet ist, die charakteristischen Eigenschaften mit in der Recheneinheit (24) hinterlegten Vergleichswerten abzugleichen, und wobei die Recheneinheit (24) dazu eingerichtet ist, den seitlichen Abstand anhand dieser Werte mittels des Antriebsmotors (21), insbesondere fortlaufend, einzustellen.

4. Hackvorrichtung (100) nach einem der vorherigen Ansprüche, **dadurch gekennzeichnet, dass** zumindest eine zusätzliche Reihenerfassungsvorrichtung (27) vorgesehen und derart bezüglich des Kulturpflanzenbestands ausgerichtet ist, dass diese einen Vorher-Nachher-Vergleich mit den Informationen ermöglicht, welche von der anderen Reihenerfassungsvorrichtung (27) bereitgestellt werden.

5. Hackvorrichtung (100) nach einem der vorherigen Ansprüche, **dadurch gekennzeichnet, dass** das Steuergerät (23) der Hackvorrichtung (100) oder des Traktors eine Anzeigeeinheit (25) umfasst, welche zumindest die aktuell eingestellte Position des zumindest einen seitlich verstellbaren Hackwerkzeugs (2) anzeigt.

6. Hackvorrichtung (100) nach einem der vorherigen Ansprüche, **dadurch gekennzeichnet, dass** das Steuergerät (23) ein Eingabemittel (26) aufweist, welches die Eingabe eines einzustellenden seitlichen Abstands des zumindest einen seitlich verstellbaren Hackwerkzeugs (2) durch eine Bedienperson ermöglicht.

7. Hackvorrichtung (100) nach einem der vorherigen Ansprüche, **dadurch gekennzeichnet, dass** die Recheneinheit (24) mit dem Steuergerät des Traktors in Kommunikationsverbindung steht.

8. Hackvorrichtung (100) nach einem der vorherigen Ansprüche, **dadurch gekennzeichnet, dass** mittels der mindestens einen Reihenerfassungsvorrichtung (27) und/oder der Erfassungsmittel (26) charakteristische Eigenschaften der in Reihe angebauten Nutzpflanzen oder Feldfrüchte ermittelbar sind.

9. Hackvorrichtung (100) nach einem der vorherigen Ansprüche, **dadurch gekennzeichnet, dass** das zumindest eine Hackwerkzeug (2a, 2c) höhenverstellbar und/oder lösbar an dem Verstellmittel (3) angeordnet ist.

10. Hackvorrichtung (100) nach einem der vorherigen Ansprüche, **dadurch gekennzeichnet, dass** ein Hackwerkzeug (2) individuell unabhängig von einem weiteren Hackwerkzeug (2) einstellbar ist, wobei insbesondere die Einstellung des seitlichen Abstands des zumindest einen Hackwerkzeugs (2) gegenüber dem Träger (1) oder dem anderen Hackwerkzeug (2) während des Einsatzes der Hackvorrichtung (100) durchführbar ist.

11. Hackvorrichtung (100) nach einem der vorherigen Ansprüche, **dadurch gekennzeichnet, dass** der Antrieb (9) als Linearantrieb, insbesondere als eine Gewindespindel (10), ausgeführt ist, wobei insbesondere die Gewindespindel (10) durch eine Handkurbel (11) manuell betätigbar ist, und insbesondere die Handkurbel (11) arretierbar ist.

12. Hackvorrichtung (100) nach einem der vorherigen Ansprüche, **dadurch gekennzeichnet, dass** das Verstellmittel (3) eine positionsveränderliche Linearführung (13) umfasst, wobei insbesondere die Linearführung (13) zumindest eine Führungsstange (14) umfasst, deren Position relativ zum Träger (1) sich durch den mit der zumindest einen Führungsstange (14) verbundenen Linearantrieb (10, 21) verändern lässt, und insbesondere dass der Linearantrieb als ein Antriebsmotor (21) ausgeführt ist.

13. Hackvorrichtung (100) nach einem der vorherigen Ansprüche, **dadurch gekennzeichnet, dass** der Linearführung (13) eine Messeinrichtung zugeordnet ist, die zur Erfassung der eingestellten Position des Hackwerkzeugs (2) eingerichtet ist.
